(19) Europäisches Patentamt
European Patent Office
Office européen des brevets

(11) **EP 2 627 086 A1**

(12) **EUROPEAN PATENT APPLICATION**

(43) Date of publication:
**14.08.2013 Bulletin 2013/33**

(51) Int Cl.:
***H04N 7/26*** *(2006.01)*     ***H04N 7/34*** *(2006.01)*

(21) Application number: **12305144.3**

(22) Date of filing: **10.02.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
• **Thomson Licensing**
**92130 Issy-les-Moulineaux (FR)**
• **Inria Institut National de Recherche en Informatique et en Automatique**
**78150 Le Chesnay (FR)**

(72) Inventors:
• **Chérigui, Safa**
**69100 Villeurbanne (FR)**
• **Guillemot, Christine**
**35042 Rennes Cedex (FR)**
• **Thoreau, Dominique**
**35510 Cesson Sevigne (FR)**
• **Guillotel, Philippe**
**35770 Vern sur Seiche (FR)**

(74) Representative: **Lorette, Anne et al**
**Technicolor**
**1-5 Rue Jeanne d'Arc**
**92130 Issy-les-Moulineaux (FR)**

(54) **Method and device for encoding a block of an image and corresponding reconstructing method and device**

(57) The invention relates to image block encoding and decoding. More precisely, the invention relates to block prediction using reference blocks of the image.

It is proposed a method which comprises using processing means for using at least the block for determining one reference block in an already encoded part of the image, encoding and reconstructing a part of the image, using at least the block for determining one reference block in the reconstructed part and a indicator referencing the one reference block, using the one reference block for determining at least one further reference block in the reconstructed part and encoding the determined indicator and a residual of the block with respect to a combination of the one and the at least one further reference block.

Using the block for determination of the one reference block allows for selecting it such that it resembles the block and correlation with the block is maintained.

Fig. 2

**Description**

TECHNICAL FIELD

The invention relates to image block encoding and reconstructing. More precisely, the invention relates to block prediction using reference blocks of the image.

BACKGROUND OF THE INVENTION

In spatial prediction a block to-be-encoded or to be-decoded is predicted using one or more reference blocks comprised in a reconstructed part of the same image.

Determining of reference blocks can be done in various ways. For instance, block matching is used for determining, in the reconstructed part of the same image, a reference block which resembles the block to-be-predicted.

SUMMARY OF THE INVENTION

The inventors recognized that prior art search for a matching reference blocks can be costly and that encoding indicators indicating reference blocks requires bandwidth.

For encoding a block of an image it is therefore proposed a method according to claim 1 and a device according of claim 8. Said method comprises encoding and reconstructing a part of the image, and using a reconstructed neighbourhood adjacent the block for determining reference block candidates in the reconstructed part and indicators referencing the reference block candidates, using the block for selecting, among the reference block candidates, a first reference block and, among the indicators referencing the reference block candidates, a corresponding indicator referencing the first reference block, and encoding the selected corresponding indicator and a residual of the block with respect to a prediction determined using at least the selected first reference block.

Using a reconstructed neighbourhood adjacent the block for determining reference block candidates and selecting a first reference block among the determined reference block candidates allows for a more efficient search for said first reference block as well as a more efficient indication of the selected first reference block.

In an embodiment, the block is used for selecting the first reference block from the reference block candidates such that the selected first reference block resembles the block at least as much as each other reference block candidates, wherein at least one further reference block is selected from the other reference block candidates using the selected first reference block, and wherein the prediction is determined using the first reference block and the at least one further reference block.

In a further embodiment, a reconstructed neighbourhood adjacent the selected first reference block is further used for determining the at least one further reference block.

In a yet further embodiment, the combination of the first and the at least one further reference block is a weighted linear combination, wherein weights for said weighted linear combination are determined by solving a constrained least square problem or a non local mean problem.

Weights for said weighted linear combination can be determined, for instance, from the neighbourhood adjacent to the block and reconstructed neighbourhood adjacent the selected first reference block and at least one further reconstructed neighbourhood adjacent to the at least one further block.

The constrained least square problem can be solved using, for example, locally linear embedding or non-negative matrix factorization.

In another embodiment, for each of the reference block candidates selected as a first reference block candidate, the block is used for selecting at least one further reference block candidate from the other reference block candidates such that the selected at least one further reference block candidate resembles the selected first reference block candidate at least as much as each remaining of the other reference block candidates. The another embodiment comprises using the neighbourhood adjacent to the block and reconstructed neighbourhood adjacent the selected first reference block candidate and at least one further reconstructed neighbourhood adjacent to the at least one further reference block candidate for determining weights of minimal residual error achievable using a weighted linear combination of the selected first with the at least one further reference block candidate, and selecting that one of the first reference block candidates as first reference block for which the minimal residual error is at least as low as that of each other first reference block candidates.

For reconstructing a block of an image, the method according to claim and the device according to claim are proposed. The method for reconstructing a block of an image comprises reconstructing a part of the image, decoding an encoded residual of the block and decoding an encoded indicator referencing a reference block in the reconstructed part, using a reconstructed neighbourhood adjacent the block for determining reference block candidates in the reconstructed part and indicators referencing the reference block candidates, using the decoded indicator for selecting one of the reference block candidates as first reference block, and reconstructing the block by combining the residual with a prediction determined using at least the selected first reference block.

The features of further advantageous embodiments are specified in the dependent claims.

BRIEF DESCRIPTION OF THE DRAWINGS

Exemplary embodiments of the invention are illustrated in the drawings and are explained in more detail in the following description. The exemplary embodiments are explained only for elucidating the invention, but not for limiting the invention's disclosure or scope defined in the claims.

In the figures:

Fig. 1 depicts an exemplary dictionary of reference block candidates, and

Fig. 2 depicts exemplary sub-dictionaries of reference block candidates.

EXEMPLARY EMBODIMENTS OF THE INVENTION

The invention may be realized on any electronic device comprising a processing device correspondingly adapted. For instance, the invention may be realized in a television, a mobile phone, a personal computer, a digital still camera, a digital video camera, a navigation system or a video audio system.

According to prior art a reference block for predicting a block are determined such that the reference block RB1 closely resembles the block BLK to-be-predicted.

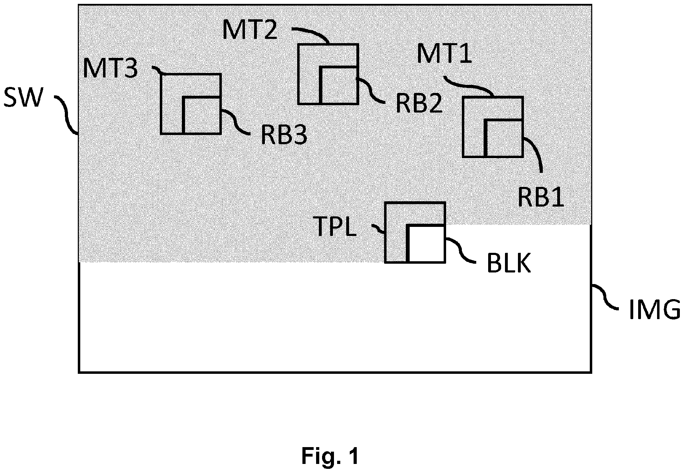

Fig. 1 exemplarily depicts a dictionary or reference block candidates in an image, the image consisting of a grey area which the part of the image which is already encoded or decoded and a white area which is the part of the image yet to be encoded or decoded. Search in the grey area is the more time consuming the larger the grey area grows and, similarly, addressing costs of best matches determined in the grey area increases with growth of the grey area due to advancing reconstruction.

In an exemplary embodiment of the proposed improvement of spatial prediction, a dictionary of reference block candidates RB1, RB2, RB3 is selected from the pool of all reconstructed blocks comprised in a search area SW depicted in grey in Fig. 1, the entire or a part of the reconstructed part of the image. The dictionary is a true subset of all reconstructed blocks. Reconstructed blocks are selected for being comprised in the dictionary according to similarity of reconstructed neighbourhoods MT1, MT2, MT3 adjacent to the reconstructed blocks RB1, RB2, RB3 to-be-selected with a reconstructed neighbourhood TPL of the block BLK to-be-predicted. Similarity can be measured using sum of square errors, for instance.

Due to this selection of reconstructed blocks to-be-comprised in the dictionary, the dictionary can be built the same way at an encoder and at a decoder.

Among the reference block candidates in the dictionary one or more reference blocks are then selected for prediction of the block. This selection can be determined using the block, its reconstructed neighbourhood or a patch comprising both, the block and its reconstructed neighbourhood.

Selection can be based on various measures, e.g. selection can be done such that the one or more selected reference blocks are those of the dictionary for which it is minimal prediction error, with respect to the block, of a weighted linear combination of the selected reference block. Or, selection can be done such that the one or more selected reference blocks are those of the dictionary for which it is minimal prediction error, with respect to the neighbourhood of the block, of a weighted linear combination of the neighbourhoods of the selected reference blocks. Or the patch comprising both, the block and its neighbourhood, is predicted using reference patches which minimize prediction error of prediction of the patch.

As well selection can be such that a first reference block is selected such that it is the one reference block candidate which best resembles the block and further reference blocks are selected from the dictionary, the further reference blocks being those of the dictionary which most resemble the first reference block. This way of selecting further reference blocks allows for selecting them the same way at encoder side and at decoder side.

Or selection can be such that a first reference block is selected such that it is the one reference block candidate which is comprised in a reference patch candidate which best resembles the patch. The reference patch candidate comprises said first reference block candidate and an adjacent reconstructed neighbourhood. Again, the further reference blocks are selected from the dictionary, the further reference blocks being those of the dictionary which most resemble the selected first reference block.

Or some reference block candidates in the dictionary are used as first block candidates and corresponding sets of further reference block candidates are determined using the first block candidates as described above. For instance, in addition to the reference block in the best resembling reference patch, reference blocks in the second-best and third-best resembling patches are used as first block candidates too.

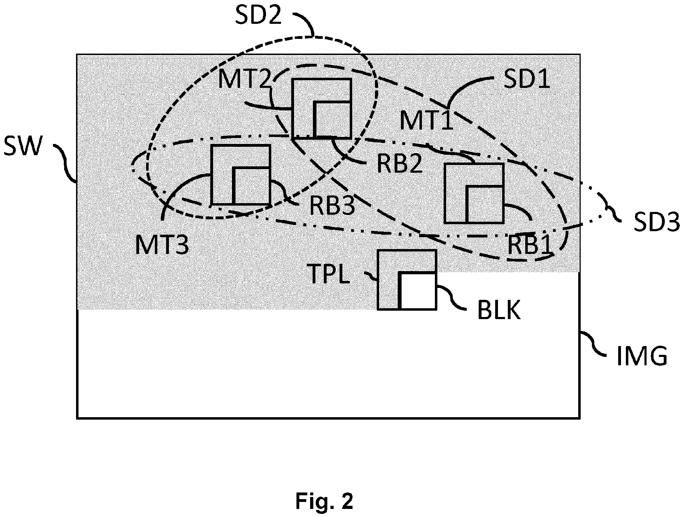

Even each reference block candidate in the dictionary can be used as a first block candidate. This is exemplarily depicted in Fig. 2. The dictionary comprising reconstructed blocks RB1, RB2 and RB3 is determined as described with respect to Fig. 1.

For each first block candidate RB1, RB2, RB3 in the dictionary, a sub-dictionary SD1, SD2, SD3 can be determined. In the example depicted in Fig. 2, the sub-dictionaries SD1, SD2, SD3 comprise the respective first block candidate RB1, RB2, RB3 and one further reconstructed block of the dictionary, i.e. SD1 comprises RB1 and RB2, SD2 comprises RB2 and RB3 and SD3 comprises RB1 and RB3.

The sub-dictionaries can differ in the number of block they comprise.

Then for each for sub-dictionary SD1, SD2, SD3, a weighted linear combination can be determined of the reference block candidates RB2, RB3, RB1 it comprises. Weights can be determined such that prediction error of the weighted linear combination is minimized wherein the block, its neighbourhood or the patch comprising both, block and its neighbourhood, can be predicted. Then that one can be selected of the first block candidates for which prediction error is minimal compared to the other first block candidates.

An exemplary embodiment of the prediction method of the invention proceeds by a two-step search in the objective to give a prediction to the current block:

In a given spatial Search Window, the entire reconstructed part of the image or a part of the reconstructed part, the first step consists in the selection, by template or neighbourhood matching, of k reconstructed neighbourhoods.

That is the k most closely resembling neighbourhoods are selected most closely resembling a neighbourhood adjacent to the current block to-be-predicted. Resemblance can be measured using Euclidian distance for instance. A dictionary is built composed of k reference blocks adjacent to the determined k most closely resembling neighbourhoods. The k reference blocks can be vectorized and stacked in a matrix, for instance. This can be done the same way at encoder as at decoder side.

In one exemplary embodiment a second step is performed which comprises selecting the one of the k reference blocks which best matches the current block to-be-predicted.

In case this selection is determined for encoding of a residual of the current block with respect to the selected one of the k reference blocks, selection can be such that rate-distortion costs are minimized. Or Euclidian distance is minimized by the selection. In this case an indicator referencing the selected reference block is encoded, e.g. the position of the selected one of the k reference blocks in the matrix stack.

In case this selection is determined for reconstructing of the current block using a residual of the current block and the selected one of the k reference blocks, the selection is made using a decoding of an encoded indicator referencing the selected one of the k reference blocks, e.g. the position of the selected one of the k reference blocks in the matrix stack.

In one other exemplary embodiment the dictionary is composed of k reference patches comprising the determined k most closely resembling neighbourhoods and the k reference blocks to which they are adjacent to. The k reference patches can be vectorized and stacked in a matrix, for instance. This can be done the same way at encoder as at decoder side.

Then, the second step can comprise selecting as a first reference block that one which is comprised in the one of the k reference patches which matches best the patch comprising the current block to-be-predicted and the reconstructed neighbourhood adjacent to the current block.

In case this selection is determined for encoding of a residual of the current block with respect to a prediction determined using the reference block comprised in selected one of the k reference patches, selection can be such that rate-distortion costs are minimized. Or Euclidian distance is minimized by the selection. In this case an indicator referencing the selected reference block is encoded, e.g. the position of the selected one of the k reference patches in the matrix stack.

In case this selection is determined for reconstructing of the current block using a residual of the current block and the reference block comprised in selected one of the k reference patches, the selection is made using a decoding of an encoded indicator referencing the selected one of the k reference patches, e.g. the position of the selected one of the k reference patches in the matrix stack.

In addition to the selected one reference patch further reference patches can be selected from the dictionary wherein a selection criterion can be resemblance of the selected one reference patch. This can be done the same way at encoder as at decoder side.

A prediction of the block than can be determined using weighted linear combination of the reference blocks in the selected one reference patch and the selected further reference patches.

Weights of said weighted linear combination can be determined differently. In one embodiment, they are determined as to minimize rate-distortion costs of encoding of a residual of the current block with respect to the weighted linear combination of the reference blocks in the selected one reference patch and the selected further reference patches using the determined weights. Then the determined weights have to be encoded to enable reconstruction.

Much the same way, the weights can be determined as to minimize rate-distortion costs of encoding of a residual of the current patch comprising the current block and its template with respect to a weighted linear combination of the selected one reference patch and the selected further reference patches using the determined weights. Again, the determined weights have to be encoded to enable reconstruction.

Alternatively, weights can be determined as to minimize rate-distortion costs of encoding or as to minimize prediction error of a residual of the template or neighbourhood of the current block with respect to a weighted linear combination of the reference templates comprised in the patches using the determined weights. In this case, weights can be determined the same way by encoder and decoder and there is no need for encoding weights.

Instead of a single set of weights, up to k sets of weights can be determined. That is instead of selecting one reference block or patch in the second step, for each reference block in the dictionary or each reference patch in the dictionary a sub-dictionary is determined. The sub-dictionary comprises the respective reference block as a first reference block candidate and further reference block candidates determined using block matching with the first block candidate or patch matching with the patch comprising the first block candidate. For each sub-dictionary, a set of weights is determined minimizing prediction error or rate-distortion costs.

Another way of determining up to k sets of weights comprises an ordering of the blocks in the dictionary. For instance, a first reference block in the dictionary is selected according to a selection criterion and the remaining reference blocks in the dictionary are ordered according to their similarity with the selected first reference block, e.g. their Euclidian distance from the first reference block. Or, instead of block similarity, patch similarity is used as ordering criterion.

The ordering of the dictionary can be used for different purposes, also. For instance, blocks in the dictionary more similar to the first block tend to be assigned higher weights and ordering of the blocks results increased likelihood of weights being ordered in a decreasing order which is beneficial for encoding efficiency.

Then up to k weight sets can be determined each comprising k weights: The first weight set comprising weights equal to zero for each-but-the first reference block in the dictionary and allows for non-zero weight for the first reference block only, the second weight set comprising weights equal to zero for each but the first reference block and the one most closely resembling it and allows for non-zero weights only for the first reference block and for the one most closely resembling it, and so on to the k-th set allowing for non-Zero weights for all reference blocks in the dictionary. Non-zero weights within each of the sets are determined such that error of a predicted neighbourhood with respect to the reconstructed neighbourhood of the block to-be-predicted is minimized.

To select a set of weights $V^1$ associated with the one of the k sub-dictionaries that will be retained to predict the current block, two distance measures can be then considered: the one is a distance measure based directly on the embedding prediction error, for instance it can be minimized sum of square errors between prediction $A_u^1 V^1$ which is based on dictionary $A_u^1$ and current block $X_u$ to-be-predicted to obtain the best prediction $l_{opt}$:

$$l_{opt} = \arg\min_{0 \leq l < k} \left\| X_u - A_u^l V^l \right\|$$

The second one is a distance measure based on the embedding rate-distortion cost in case it is desirable to select the prediction that provides the best compromise between the quality of the reconstructed block and the coding cost of the block. That is it is minimized a Rate-Distortion cost in order to select the prediction that provides the best compromise between the quality of the reconstructed block and the coding cost of the block, i.e.,

$$l_{opt} = \arg\min_{0 \leq l < k} \left( D^l - \lambda R^l \right)$$

where $D^1$ represents the distortion between the current block and the reconstructed block by using the SSE distance metric, and $R^1$ being the coding cost at least of encoding residual of the block with respect to the prediction $A_u^1 V^1$ which is based on dictionary $A_u^1$. Coding costs of syntax elements and/or the weights can be further taken into account.

Exemplary targeted industrial applications are video distribution (inc. compression) and display technologies. Applications related to video compression and content representation are also concerned.

**Claims**

1. Method for predicting a block of an image using a reconstructed part of the image, the block being predicted for encoding or decoding, the method comprising using processing means for:

   - using a reconstructed neighborhood adjacent the block for determining reference block candidates in the reconstructed part and indicators referencing the reference block candidates,
   - for selecting, among the reference block candidates, a first reference block and
   - determining a prediction using at least the selected first reference block.

2. Method of claim 1 wherein it is used for encoding the block by encoding a residual of the block with respect to the prediction and a corresponding indicator referencing the first reference block, the method comprising using processing means further for:

   - encoding the reconstructed part prior to reconstruction, wherein
   - the block is used for selecting, among the reference block candidates, the first reference block such that the selected first reference block resembles the block at least as much as each other reference block candidates, and for selecting, among the indicators referencing the reference block candidates, the corresponding indicator referencing the first reference block.

3. Method of claim 1 wherein it is used for reconstructing the block by decoding an encoded residual of the block with respect to the prediction and decoding an encoded indicator referencing the first reference block, the method comprising using processing means further for:

- the decoded indicator is used for selecting, among the reference block candidates, the first reference block.

**4.** Method of claim 2 or 3, wherein at least one further reference block is selected from the other reference block candidates using the selected first reference block, and wherein the prediction is determined using the first reference block and the at least one further reference block.

**5.** Method of claim 4, wherein a reconstructed neighborhood adjacent the selected first reference block is further used for determining the at least one further reference block.

**6.** Method of claim 4 or 5, wherein the combination of the first and the at least one further reference block is a weighted linear combination, wherein weights for said weighted linear combination are determined by solving a constrained least square problem or a non local mean problem.

**7.** Method of claim 6, wherein weights for said weighted linear combination are determined from the neighborhood adjacent to the block and reconstructed neighborhood adjacent the selected first reference block and at least one further reconstructed neighborhood adjacent to the at least one further block.

**8.** Method of claim 6 or 7, wherein the constrained least square problem is solved using locally linear embedding or non-negative matrix factorization.

**9.** Method of claim 2, wherein, for each of the reference block candidates selected as a first reference block candidate,

- for each of the reference block candidates selected as a first reference block candidate, the first reference block candidate is used for selecting at least one further reference block candidate from the other reference block candidates such that the selected at least one further reference block candidate resembles the selected first reference block candidate at least as much as each remaining of the other reference block candidates, and the neighborhood adjacent to the block and reconstructed neighborhood adjacent the selected first reference block candidate and at least one further reconstructed neighborhood adjacent to the at least one further reference block candidate is used for determining weights of minimal residual error, with respect to the block, of a prediction achievable using a weighted linear combination of the selected first with the at least one further reference block candidate, and wherein
- that one of the first reference block candidates is selected as first reference block for which the minimal residual error is at least as low as that of each other first reference block candidates.

**10.** Device for predicting a block of an image using a reconstructed part of the image, the block being predicted for encoding or decoding, the device comprising processing means configured for:

- using a reconstructed neighborhood adjacent the block for determining reference block candidates in the reconstructed part and indicators referencing the reference block candidates,
- selecting, among the reference block candidates, a first reference block and
- determining a prediction using at least the selected first reference block.

**11.** Device of claim 10 wherein it is comprised in an encoder configured for encoding the block by encoding a residual of the block with respect to the prediction and a corresponding indicator referencing the first reference block, the processing means being further configured for:

- encoding the reconstructed part prior to reconstruction, wherein
- the block is used for selecting, among the reference block candidates, the first reference block such that the selected first reference block resembles the block at least as much as each other reference block candidates, and for selecting, among the indicators referencing the reference block candidates, the corresponding indicator referencing the first reference block.

**12.** Device of claim 10 wherein it is comprised in a decoder configured for reconstructing the block by decoding an encoded residual of the block with respect to the prediction and decoding an encoded indicator referencing the first reference block, the processing means being further configured for:

- use of the decoded indicator for selecting, among the reference block candidates, the first reference block.

**13.** Device of claim 11 or device of claim 12, wherein at least one further reference block is selected from the other reference block candidates using the selected first reference block, and wherein the prediction is determined using the first reference block and the at least one further reference block.

**14.** Device of claim 13, wherein a reconstructed neighborhood adjacent the selected first reference block is further used for determining the at least one further reference block, wherein the combination of the first and the at least one further reference block is a weighted linear combination, wherein weights for said weighted linear combination are determined by solving a constrained least square problem or a non local mean problem.

15. Device of claim 14, wherein weights for said weighted linear combination are determined from the neighborhood adjacent to the block and reconstructed neighborhood adjacent the selected first reference block and at least one further reconstructed neighborhood adjacent to the at least one further block.

**Fig. 1**

**Fig. 2**

Europäisches
Patentamt

European
Patent Office

Office européen
des brevets

# EUROPEAN SEARCH REPORT

Application Number

EP 12 30 5144

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GUIONNET T ET AL: "Non-CE6: Intra prediction based on weighted template matching predictors (WTM)", 7. JCT-VC MEETING; 98. MPEG MEETING; 21-11-2011 - 30-11-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/, no. JCTVC-G598, 9 November 2011 (2011-11-09), XP030110582, * the whole document * | 1-15 | INV. H04N7/26 H04N7/34 |
| X | MATTHIEU MOINARD ET AL: "A set of template matching predictors for intra video coding", ACOUSTICS SPEECH AND SIGNAL PROCESSING (ICASSP), 2010 IEEE INTERNATIONAL CONFERENCE ON, IEEE, PISCATAWAY, NJ, USA, 14 March 2010 (2010-03-14), pages 1422-1425, XP031697408, ISBN: 978-1-4244-4295-9 * the whole document * | 1-15 | |
| X | MEHMET TURKAN ET AL: "Image prediction based on non-negative matrix factorization", ACOUSTICS, SPEECH AND SIGNAL PROCESSING (ICASSP), 2011 IEEE INTERNATIONAL CONFERENCE ON, IEEE, 22 May 2011 (2011-05-22), pages 789-792, XP032000856, DOI: 10.1109/ICASSP.2011.5946522 ISBN: 978-1-4577-0538-0 | 1,10 | TECHNICAL FIELDS SEARCHED (IPC) H04N |
| A | * the whole document * | 2-9, 11-15 | |

-/--

The present search report has been drawn up for all claims

| Place of search | Date of completion of the search | Examiner |
|---|---|---|
| Munich | 30 April 2012 | Cyranka, Oliver |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**Europäisches Patentamt**
**European Patent Office**
**Office européen des brevets**

# EUROPEAN SEARCH REPORT

Application Number

EP 12 30 5144

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BOITARD R ET AL: "Integration into the TMuC of an Intra Prediction based on a linear combination of Template Matching predictors", 4. JCT-VC MEETING; 95. MPEG MEETING; 20-1-2011 - 28-1-2011; DAEGU;(JOINT COLLABORATIVE TEAM ON VIDEO CODING OF ISO/IEC JTC1/SC29/WG11AND ITU-T SG.16 ); URL: HTTP://WFTP3.ITU.INT/AV-ARCH/JC TVC-SITE/, no. JCTVC-D193, 14 January 2011 (2011-01-14), XP030008233, ISSN: 0000-0013 | 1,10 | |
| A | * the whole document * | 2-9, 11-15 | |
| A | THIOW KENG TAN ET AL: "Intra Prediction by Averaged Template Matching Predictors", CONSUMER COMMUNICATIONS AND NETWORKING CONFERENCE, 2007. CCNC 2007. 20 07 4TH IEEE, IEEE, PI, 1 January 2007 (2007-01-01), pages 405-409, XP031087817, ISBN: 978-1-4244-0667-8 * the whole document * | 1-15 | |
| | | | TECHNICAL FIELDS SEARCHED (IPC) |
| A | TURKAN M; GUILLEMOT C: "Image prediction based on neighbor-embedding methods", IEEE TRANSACTIONS ON IMAGE PROCESSING, vol. 21, no. 4, 6 October 2011 (2011-10-06), pages 1885-1898, XP002674661, * the whole document * | 1-15 | |

-----

-----

-/--

The present search report has been drawn up for all claims

| Place of search | Date of completion of the search | Examiner |
|---|---|---|
| Munich | 30 April 2012 | Cyranka, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 12 30 5144

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JOHANNES BALLE ET AL: "Extended Texture Prediction for H.264/AVC Intra Coding", IMAGE PROCESSING, 2007. ICIP 2007. IEEE INTERNATIONAL CONFERENCE ON, IEEE, PI, 1 September 2007 (2007-09-01), pages VI-93, XP031158270, ISBN: 978-1-4244-1436-9 * the whole document * | 1-15 | |
| A | US 2009/180538 A1 (VISHARAM MOHAMMED Z [US] ET AL) 16 July 2009 (2009-07-16) * the whole document * | 1-15 | |

TECHNICAL FIELDS
SEARCHED      (IPC)

The present search report has been drawn up for all claims

| Place of search | Date of completion of the search | Examiner |
|---|---|---|
| Munich | 30 April 2012 | Cyranka, Oliver |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.......................................................................................

& : member of the same patent family, corresponding
    document

## ANNEX TO THE EUROPEAN SEARCH REPORT
## ON EUROPEAN PATENT APPLICATION NO.

EP 12 30 5144

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2012

| Patent document cited in search report | Publication date | Patent family member(s) | Publication date |
|---|---|---|---|
| US 2009180538 A1 | 16-07-2009 | NONE | |

EPO FORM P0459

For more details about this annex : see Official Journal of the European Patent Office, No. 12/82